# EUROPEAN PATENT SPECIFICATION

(11) **EP 0 462 516 B1**
(45) Date of publication and mention of the grant of the patent: **06.09.1995**
(21) Application number: 91109756.6
(22) Date of filing: 14.06.1991
(51) Int. Cl.: C05F 17/00, C05F 3/00

(54) **Method and composition for the treatment of animal dejections**
Verfahren und Zusammensetzung zur Behandlung von tierischen Exkrementen
Procédé et composition pour le traitement de déjections d'animaux

(30) Priority: 18.06.1990 IT 2067290
(43) Date of publication of application: 27.12.1991
(73) Proprietor: GNOSIS SRL, I-21050 Cairate Varese) (IT)
(72) Inventor: Cerchiari Emilio c/o Gnosis Srl., I-21052 Busto Arsizio (Varese) (IT); Cappelletti, Leonardo c/o Gnosis Srl., I-21052 Busto Arsizio (Varese) (IT)
(74) Representative: Dragotti, Gianfranco

(56) References cited:
- EP-A- 0 063 621
- WO-A-88/00082
- WO-A-89/05784
- DE-A- 3 627 265
- GB-A- 1 299 630

## Description

The present invention relates to the treatment of animal dejections, particularly those resulting from the zootechnic breedings (sheep, cattle, swine, poultry etc.).

In the following specification reference shall be often made to the dejections of the swine breedings, since they are one of the materials of most difficult treatment, but it is to be understood that it should not be meant in a limiting sense of the scope of the present invention.

It is well known that the animal dejections, specially those of swine, are mostly in liquid or partially liquid form and have a very high polluting load. In the case of swines, which are normally bred in relatively narrow spaces, the organic polluting load of the sewage does easily attain BOD₅ values of hundreds thousands units.If furthermore account is taken of the fact that each swine produces on the average about 10 kg/day of dejections, it is evident that the daily volumes of sewage to be disposed off are already more than merely relevant in the case of a middle size breeding (of the order of few thousands swine).

Their depuration by the biological way, which is the only one to date theoretically feasible, raises very serious problems, since these dejections, in order to render it possible their treatment, must be diluted with high water volumes whereby the potentiality of the biological depuration plant must be very high with the self-evident problems, even from the only point of view of the investments for the plant building and operation.

On the other side, the only one alternative to the afore said type of treatment, namely the transportation of the dejections towards areas capable of allowing for the surface spreading of the dejections in the state thay have, is as matter of fact not acceptable, both owing to the environnmental impact (pollution of the water bearing strata and miasmas) and due to the high transportation costs especially in densely inhabited areas such as the Po Valley, which impose the transportation to high distance.

To date, therefor, the breeders have disposed these dejections through spreading thereof onto an agricultural soil adjacent to the breeding (and consequently exclusively used as a disposal site), the sewage remaining in temporary collecting basins or lagunes (with the attendant problems of pollution of the water bearing strata and of miasmas).

Besides the problem of the polluting load of the dejections , as regards the breedings that of the hygiene and of the comfort both of the animals and of the breeding attendants cannot be forgotten.

As a matter of fact it is well known that, when the animals are bred in closed or anyhow delimited and surrounded environnments, it is necessary to periodically carry out a cleaning operation during which there are not only removed the accumulated dejections, but also the layer of straw, sawdust and the like, forming the so-called litter, is substituted for.

It is evident that these problems, also owing to the more and more rigid rulings on the environnmental protection, heavily influence the potentialities of the zootechnic breedings.

Before illustrating the purposes and the essential features of the present invention some preliminary considerations seem to be proper.

The biological depuration of sewage (as well as of the effluent waters, both industrial and domestic) is based on the activity of microorganisms which are developed and operate under strongly aerobic conditions, giving place to resulting sludges containing both the biomass excess and the inorganic components of the polluting load.These sludges, in turn, must be disposed, although the substantial absence of polluting load renders this duty easier.

However the disposal of these sludges, either by spreading onto agricultural soils and by dehydratation and burning, raises problems and in any way causes the depuration costs to be increased by a not negligible rate, these costs obviously influencing the general industrial costs.

Besides the biological processes of aerobic type there are since long time known also anaerobic depuration methods, which are capable of solving the polluting load of whatsoever sewage; these methods would be very useful in the case of animal dejections since the microorganisms responsible of the activity by which the polluting organic components are removed operate in substantial absence of oxygen and thus no aeration of the sewage is necessary.

However also in this case essentially insurmountable problems exist rendering it unacceptable the application of such a method to the treatment of the animal dejections.

Firstly the anaerobicity of the method requires the introduction of the sewage into a closed environnment (being either a ditch digged into the ground or a tank or reservoir) with the self-evident problems owing to the volumes of dejections to be treated.

Secondly the substantial elimination of the organic polluting load requires very long times, of the order of several weeks, whereby their exploitation becomes industrially unacceptable.

The latter problem has also caused the so-called mixed processes, resulting from the combination of a first phase of aerobic nature and of a second phase of anaerobic nature, to be unfeasible.

It is lastly to be noticed that anyhow the depuration of sewages originating from the zootechnic breedings has never taken it into account or even taken it into consideration the further problem as above mentioned, namely that of the hygiene and comfort situation of the breeding farms.

The latter as a matter of fact have been faced separately, by proposing grids or like dividing elements adapted to permit the removal of the dejections, especially the liquid ones, within wells or collecting headers, wherefrom the sewage was later removed and transferred to the depuration. It however has not solved the problem of the litters, remaining moist and dirty, whereby the need of their frequent renewal remained unchanged.

It is lastly to be noticed that in the animal dejections and thus in the litter autochthonous microorganisms are present which, in very long times comparable with those of the anaerobic depuration or digestion as above mentioned, may carry out a slow depuration or more exactly a degradation of the subject dejections, according to a mechanism like that occuring in the standard dung-heaps.

WO-A-8800082 discloses a static process for the preparation of compost by means of heaps, wherein stabilized manure is added with residues of various nature, like fillers, and pH stabilizing additives (3 to 4% of calcium hydrate).

The process is discontinuous since the heaps are treated as such for 13 to 14 days and the temperatures reach very high values (70 to 75°C.) which are typical of the manure forming process.

In EP-A-63621 dejections and sewage in liquid form are directly treated in the collecting lagoons. The process is based on the addition of saponine, which has the effect of dissolving the surface fatty layer at the lagoon surface, since the elimination of this fatty layer promotes the growth of bacteria, still in liquid phase.

In GB-A-1299630 the preparation of substrates for the growth of edible mushrooms is described.

Main purpose of the present invention is that of providing a method by which all the problems as above shortly pointed out are substantially solved in an industrially advantageous and technically satisfactory manner.

It has been surprisingly found and is the main object of the present invention that, if the animal dejections are admixed with a lignocellulosic biomass in form of discrete particles (wood shavings, sawdust and the like) and this mixture is sprayed with an activating nutrient composition, capable of promoting and support the growth of the microorganisms naturally present in the dejections, a fermentation of aerobic type occurs within the mixture with a degradation of faeces or ordures and of the urines to simpler and readily degradable compounds, said fermentation taking place with a high heat development.

More particularly in the method for the treatment of animal dejection of the present invention, the dejections are admixed with the surface layer of a fermentation bed consisting of an inert material in particle form, said inert material being lignocellulosic material, said bed having a thickness of at least 20 cm, and this mixture is sprayed with an activating nutrient composition, comprising a source of metabolizable or fermentable carbon, a source of assimilable nitrogen and a phosphor source in form of a mineral salt, capable of promoting or enhance the growth of the microorganisms naturally present in the dejections, whereafter a fermentation is carried out with heat development in the mixture until the substances composing the ordures and the urines are decomposed to simpler products.

In the preferred embodiment of the method according to the present invention said aerobic fermentation is followed by an endothermal anaerobic fermentation acting on the said products resulting from the degradation of the ordures and urines which occurred during said aerobic fermentation.

More particularly, within the scope of the said preferred embodiment, said two fermentations, aerobic and anaerobic respectively, are carried out in a spatial succession within only one fermentation bed consisting of lignocellulosic particles, such that said first aerobic fermentation occures within the upper layer of said bed, whereas said anaerobic fermentation takes place in the lower part of said bed in which the degradation compounds of faeces and urines, as resulting from said aerobic fermentation, are passed by natural percolation.

As regards the activating nutrient composition, which is too an object of the present invention, it is characterized by comprising, as the essential components:
a) a source of metabolizable or fermentable carbon, selected among simple and complex sugars, organic acids and their salts and alcohols;
b) a source of nitrogen which can be assimilated from the microorganisms present in the dejections, said source being selected among ammonia salts (including urea) and soluble proteins;
c) a source of phosphor in form of mineral salts;
   said composition being furthermore characterized in that the components (a) and (b) give place to a C:N ratio of between 2:1 and 3:1.

In the preferred embodiment of the activating nutrient composition according to the present invention, it comprises furthermore one or more vitamins, selected among those promoting the growth of the afore said microorganisms present in the animal dejections, and/or mineral salts.

An essential feature of the present invention resides in that the said fermentation bed, both during and at the end of a dejection treatment cycle, shows an essentially dry surface and in form of readily flowable and mould looking particles, whereby it can be readily admixed with further animal dejections in order to repeat a new depuration cycle or, after a certain number of cycles which may cover a time of several months or even one year, remove a surface layer of the bed (it being useful as agricultural manure or integrating material).

Moreover the disagreable smell otherwise constantly present in the enclosures and breeding farms, especially in the case of swine breedings, is substantially absent.

A further advantageous feature of the method of the present invention resides in that the complete cycle of depuration of a sewage or dejection charge has a maximum duration of one week and, moreover, the depuration treatment does not give place to sludges but only to water, gaseous methane which is naturally vented outwardly and a modest amount of mineral salts, which being insoluble are solid.

In the case it is desired to obtain more frequent depuration cycles, for example to face relevant amounts of dejections, a non completely depurated percolate can be obtained from the fermentation, it having however a polluting load of few thousands BOD units, which easily fall within the capacity and potentiality of a standard biological depuration plant.

Some examples of an activating nutrient composition are now provided, it being meant that these examples have non limiting function.

In the following examples the indicated amounts relate to one kilogram of composition, which for the application must be in liquid form to permit the distributed spraying on the surface of the fermentation bed; the composition can be obviously prepared in solid form and subsequently it can be diluted with water upon being used.

### Example 1.

| | |
|---|---|
| Reducing sugars (essentially dextrose) | g 240-260 |
| lactic acid | g 90- 95 |
| soluble proteins* | g 170-180 |
| mineral salts** | g 65- 75 |
| vitamins*** | g 0.20-0.25 |
| water | g 370-390 |

| | |
|---|---|
| *As soluble proteins there are meant those containing the following aminoacids: arginine, histidine, lysine, phenylalanine, tyrosine, leucine, isoleucine, methionine, cystine, valine, alanine, glycine, proline, glutamic acid, threonine, aspartic acid, serine. | |
| ** In a typical composition of mineral salts, they contain 12-13 g phosphor, 100-200 ppm iron, 2-3 ppm copper, 20-30 ppm manganese and 80-150 ppm zinc. | |
| *** As the vitamins suitable for use in the nutrient compositions of the present invention the following are meant: thiamine, riboflavin, folic acid, vitamin B₁₂, choline, biotin, mioinositol, pyridoxine, p-aminobenzoic acid, nicotinamide, pantothenic acid. | |

### Example 2

| | |
|---|---|
| Reducing sugars | g 210 |
| sodium lactate | g 90 |
| soluble proteins | g 172 |
| mineral salts | g 77 |
| vitamins | g 0.20 |
| water | g 440 |

### Example 3

| | |
|---|---|
| Reducing sugars | g 210 |
| complex sugars | g 300 |
| lactic acid | g 125 |
| soluble proteins | g 260 |
| mineral salts | g 105 |
| vitamins | g 0.30-0.35 |

The method of treatment according to the present invention is suitable for the application both within the breeding farm and outwardly thereof.

In both cases a fermentation bed is prepared consisting of lignocellulosic material, such as dry wood residues, comminuted straw, sawdust, wood shavings, residues of the rice processing, ground loppings or trimmings, etc. or even other inert material, for example materials of inorganic nature and preferably porous such as vermiculite, chamotte, pumice and the like.

When the method of the present invention is carried out in two spatially successive steps or phases,this fermentation bed has preferably a thickness not less than 70 cm and preferably of between 90 and 150 cm.

The surface layer of the bed is admixed with the volume of dejections to be treated, and thereafter the surface of the fermentation bed is sprayed with the activating nutrient composition, for example as those preferably given as examples, in an amount of 0.2 to 1 g/sq.m.

Within some hours in the surface layer and for a thickness of about one third of the height of the fermentation bed an aerobic fermentation is started, which is signalled by a rapid increase of the temperature which after few hours attains values of the order of 50°C.

As the ordures and the urines, under the action of the microorganisms present in the faeces and activated by the said composition, are degraded to simpler products, they percolate to the underneath layers of the fermentation bed wherein a fermentation of anaerobic type occurs which originates at the very end only water, carbon dioxide and methane, as well as water insoluble mineral salts which are collected at the bottom of the fermentation bed.

At regular intervals, of the duration of about one week, the surface of the litter is worked out, for example by means of a harrow, in order to oxygenate the surface layer in which the charge of dejections to be treated is admixed by digging. The surface is then sprayed with the activating nutrient composition.

With such a fermentation bed it is possible to repeat the treatment cycles by periods which may attain 12 months and more, whereafter the surface layer for a thickness of 25 to 30 cm is removed and substituted for by fresh lignocellulosic material.

The surface layeras removed is very similar to a dry mould and can be used as organic fertilizer or soil integrating additive, especially for horticulture.

The average analysis of the material as just removed from the fermentation bed is the following:

| | |
|---|---|
| moisture | 50 - 60% |
| raw protides | 6 - 8% |
| raw fibers | 20 - 30% |
| ashes | 7 - 10% |
| pH | 6.5 - 7 |

By the method of the present invention further advantages are obtained:
- The breeding environnment is definitely improved from the point of view of the wll-being of the animals and of the attendants to the breeding.
- The smell is almost completely eliminated.
- From the step of aerobic fermentation heat is generated (of the order of 2-3 Kcal per gram of litter), which can be recovered and exploited for example for the energy requirements of the breeding farm.
- The work of the breeding attendants is substantially alleviated, since it is no longer necessary to carry out the daily cleaning and the renewal of the litter, when the latter consists of the fermentation bed itself.

A further advantage resides in the possibility of exhausting in a short time and thus eliminating the usual lagunes for the dejection collection, which are adopted in almost all breeding farms; for the elimination of these lagunes it is sufficient to build up near to the lagune to be delat with a fermentation bed of the above defined type and then carry out the above described treatment cycles.

The invention has been described with reference to a preferred embodiment, but conceptually and mechanically equivalent variations and modifications are possible and foreseable, without falling out of its scope.

For example and as already mentioned, the aerobic fermentation can be carried out without the anaerobic one as immediately subsequent, the partially treated sludges being transferred to a separate depuration unit, as the sewage to be depurated.

## Claims

1. A method for the treatment of animal dejection wherein the dejections are admixed with the surface layer of a fermentation bed consisting of an inert material in particle form, said inert material being lignocellulosic material, said bed having a thickness of at least 20 cm, and this mixture is sprayed with an activating nutrient composition, comprising a source of metabolizable or fermentable carbon, a source of assimilable nitrogen and a phosphor source in form of a mineral salt, capable of promoting or enhance the growth of the microorganisms naturally present in the dejections, whereafter a fermentation is carried out with heat development in the mixture until the substances composing the ordures and the urines are decomposed to simpler products.

2. A method according to claim 1, wherein said lignocellulosic material is selected among wood residues, comminuted straw, sawdust, wood shavings, residues of the wheat and rice processing and ground trimmings or loppings.

3. A method according to claim 1, wherein said nutrient composition further comprises vitamins and possibly other mineral salts.

4. A method for the treatment of animal dejections, wherein the dejections are admixed with the surface layer of said fermentation bed consisting of inert material having a thickness of at least 70 cm, the surface of which is sprayed with said activating nutrient composition whereafter an aerobic fermentation is carried out in the upper part of said fermentation bed, whereas in the underneath part of the same fermentation bed an anaerobic fermentation is carried out, until the decomposition products of the ordures and urines, as due to said phase of aerobic fermentation, are at least partially mineralized.

5. A method according to claim 4, wherein said aerobic fermentation takes place in the upper third of said fermentation bed with heat development, whereas said anaerobic fermentaiton takes place with heat absorption in the remaining two thirds of said fermentation bed.

6. A method according to claim 1 and/or 4 wherein at predetermined time intervals the surface layer of said fermentation bed is aerated and admixed with a new charge of dejection to be treated, the spraying with said activating nutrient composition being then carried out.

7. A method according to claim 6, wherein said predetermined time interval is one weed.

8. A method according to claim 6, wherein, after a predetermined number of cycles, the upper layer of said fermentation bed, corresponding to the part of the bed in which the aerobic fermentation takes place, is removed and made up with new lignocellulosic material.

9. A method according to claim 8, wherein said surface layer being removed and substituted for by fresh lignocellulosic material has a thickness of 25 to 30 cm.

10. A method according to claims 1 and/or 4, wherein the surface of the fermentation bed, before being sprayed with the said activating nutrient composition, is worked out in order to oxygenate the surface layer in which the dejections to be treated are admixed by digging.

11. Use of an activating nutrient composition comprising a source of metabolized or fermentable carbon, a source of assimilable nitrogen and a phosphor source in form of a mineral salt for the spraying of the surface of a fermentation bed comprising animal dejections admixed with an inert material in particle form, consisting of lignocellulosic material in order to promote or enhance the growth of microorganisms naturally present in the dejections and the decomposition of the substances comparing the ordures and the urines.

12. Use according to claim 11, wherein said carbon source is selected among simple and complex sugars, organic acids and their salts, and alcohols.

13. use according to claim 11, wherein said source of assimilable nitrogen is selected among ammonia salts, including urea, and soluble proteins.

14. Use according to claim 11, wherein components give place to a ratio C:N of between 2:1 and 3:1.

15. Use according to claim 11, wherein said activating nutrient composition further comprises vitamins.

16. Use according to claim 11, wherein said activating nutrient composition further comprises mineral salts different from the said phosphor salt.

## Patentansprüche

1. Verfahren zur Behandlung von Tierexkrementen, bei dem die Exkremente mit der Oberflächenschicht eines Fermentierungsbetts vermischt werden, das aus einem inerten Material in Teilchenform besteht, wobei das inerte Material lingninhaltiger Zellstoff ist, das Bett eine Dicke von mindestens 20 cm hat und diese Mischung mit einer aktivierenden Nährzusammensetzung berieselt wird, umfassend eine Quelle für umwandlungsfähigen und fermentierbaren Kohlenstoff, eine Quelle für assmimilierbaren Stickstoff und eine Phosphorquelle in Form eines Mineralsalzes, mit der Eigenschaft, das Wachstum der Mikroorganismen, die natürlich in den Extrementen vorhanden sind, zu fördern oder zu verstärken, wonach eine Fermentierung mit Wärmeentwicklung in der Mischung durchgeführt wird, bis die Substanzen, die den Kot und das Urin aufbauen, in einfachere Produkte zersetzt sind.

2. Verfahren nach Anspruch 1, bei dem der ligninhaltige Zellstoff unter Holzresten, zerkleinertem Stroh, Sägemehl, Hobelspänen, Resten der Weizen- und Reisverarbeitung und Boden-Schneidgut oder abgehauenen Ästen ausgewählt ist.

3. Verfahren nach Anspruch 1, bei dem die Nährzusammensetzung ferner Vitamine und möglicherweise weitere Mineralsalze umfaßt.

4. Verfahren zur Behandlung von Tierexkrementen, bei dem die Exkremente mit der Oberflächenschicht des Fermentierungsbetts, das aus inertem Material besteht, mit einer Dicke von mindestens 70 cm vermischt werden, dessen Oberfläche mit der aktivierenden Nährzusammensetzung berieselt wird, wonach eine aerobe Fermentierung in dem oberen Teil des Fermentierungsbetts durchgeführt wird, während in dem unteren Teil desselben Fermentierungsbetts eine anaerobe Fermentierung durchgeführt wird, bis die Zersetzungsprodukte von Kot und Urin, wie auf die Phase der aeroben Fermentierung zurückzuführen, zumindest teilweise mineralisiert sind.

5. Verfahren nach Anspruch 4, bei dem die aerobe Fermentierung in dem oberen Drittel des Fermentierungsbetts mit Wärmeentwicklung stattfindet, während die anaerobe Fermentierung in den verbleibenden zwei Dritteln des Fermentierungsbetts mit Wärmeabsorption stattfindet.

6. Verfahren nach Anspruch 1 und/oder 4, bei dem bei vorbestimmten Zeitabständen die Oberflächenschicht des Fermentierungsbetts belüftet wird und mit einer neuen, zu behandelnden Exkrementladung vermischt wird, wobei das Berieseln mit der aktivierenden Nährzusammensetzung dann ausgeführt wird.

7. Verfahren nach Anspruch 6, bei dem der vorbestimmte Zeitabstand eine Woche ist.

8. Verfahren nach Anspruch 6, bei dem nach einer vorbestimmten Anzahl an Zyklen die obere Schicht des Fermentierungsbetts, die dem Teil des Betts entspricht, in dem die aerobe Fermentierung stattfindet, entfernt wird und mit neuem ligninhaltigen Zellstoff aufgefüllt wird.

9. Verfahren nach Anspruch 8, bei dem die Oberflächenschicht, die entfernt wird und durch frischen ligninhaltigen Zellstoff ersetzt wird, eine Dicke von 25 bis 30 cm hat.

10. Verfahren nach Anspruch 1 und/oder 4, bei dem die Oberfläche des Fermentierungsbetts, bevor sie mit der aktivierenden Nährzusammensetzung berieselt wird, durchgearbeitet wird, um die Oberflächenschicht, in die die zu behandelnden Exkremente durch Graben eingemischt werden, mit Sauerstoff zu versetzen.

11. Verwendung einer aktivierenden Nährzusammensetzung, umfassend eine Quelle für umwandlungsfähigen oder fermentierbaren Kohlenstoff, eine Quelle für assimilierbaren Stickstoff und eine Phosphorquelle in Form eines Mineralsalzes zum Berieseln der Oberfläche eines Fermentierungsbetts mit Tierexkrementen, die mit einem inerten Material in Teilchenform vermischt sind, das aus ligninhaltigem Zellstoft besteht, um das Wachstum von Mikroorganismen, die natürlich in den Exkrementen vorhanden sind, und die Zersetzung der Substanzen, die den Kot und das Urin aufbauen, zu fördern oder zu verstärken.

12. Verwendung nach Anspruch 11, wobei die Kohlenstoffquelle unter einfachen und komplexen Zuckern, organischen Säuren und ihren Salzen und Alkoholen ausgewählt ist.

13. Verwendung nach Anspruch 11, wobei die Quelle für assimilierbaren Stickstoff unter Ammoniaksalzen, umfassend Harnstoff, und löslichen Proteinen ausgewählt ist.

14. Verwendung nach Anspruch 11, wobei die Bestandteile ein C:N-Verhältnis zwischen 2:1 und 3:1 ergeben.

15. Verwendung nach Anspruch 11, wobei die aktivierende Nährzusammensetzung ferner Vitamine umfaßt.

16. Verwendung nach Anspruch 11, wobei die aktivierende Nährzusammensetzung ferner Mineralsalze umfaßt, die von dem Phosphorsalz verschieden sind.

## Revendications

1. Une méthode pour le traitement des déjections animales dans laquelle les déjections sont mélangées à la couche de surface d'un lit de fermentation consistant en un matériau inerte particulaire, ledit matériau inerte étant de nature lignocellulosique et présentant une épaisseur d'au moins 20 cm, ladite couche supérieure ainsi mélangée étant traitée par pulvérisation d'une composition de nutriment actif comprenant une source de carbone métabolisable ou fermentable, une source d'azote assimilable et une source de phosphore sous forme d'un sel minéral capable de déclencher ou d'augmenter la croissance de micro-organismes naturellement présents dans les déjections, après quoi se développe une fermentation exothermique dans le mélange jusqu'à ce que les substances constituant les ordures et urines à traiter soient décomposées en des produits plus simples.

2. Une méthode selon la revendication 1 dans laquelle le matériau lignocellulosique est choisi parmi les résidus de bois, la paille hâchée, le sciure de bois, les copeaux, les résidus du traitement du blé et du riz ainsi que les résidus de coupes, fauchages ou émondages.

3. Une méthode selon la revendication 1 dans laquelle ladite composition de nutriment comprend des vitamines et, éventuellement, d'autres sels minéraux.

4. Une méthode pour le traitement des déjections animales dans laquelle les déjections sont mélangées à la couche de surface dudit lit de fermentation, consistant en un matériau inerte sous une épaisseur d'au moins 70 cm dont la surface est traitée par pulvérisation par ladite composition de nutriment actif, après quoi se développe une fermentation aérobie dans la partie supérieure dudit lit de fermentation tandis que se développe, dans la partie sous jacente du même lit de fermentation, une fermentation anaérobie jusqu'à ce que les produits de décomposition des ordures et des urines, sous l'effet de cette phase de fermentation aérobie soient au moins partiellement minéralisés.

5. Une méthode selon la revendication 4 dans laquelle la fermentation aérobie se développe de façon exothermique dans le tiers supérieur dudit lit de fermentation tandis que la fermentation anaérobie s'effectue de façon endothermique dans les deux tiers inférieurs dudit lit de fermentation.

6. Une méthode selon la revendication 1 et/ou la revendication 4 dans laquelle, à des intervalles de temps prédéterminés, la couche de surface dudit lit de fermentation est aérée et mélangée avec une nouvelle charge de déjections à traiter, avec pulvérisation subséquente de ladite composition de nutriment actif.

7. Une méthode selon la revendication 6 dans laquelle ledit intervalle de temps prédéterminé est d'une semaine.

8. Une méthode selon la revendication 6 dans laquelle, après un nombre prédéterminé de cycles, la couche supérieure dudit lit de fermentation correspondant à la portion du lit dans laquelle la fermentation aérobie s'effectue est retirée et remplacée par une couche fraîche de matériau lignocellulosique.

9. Une méthode selon la revendication 1 dans laquelle la couche supérieure retirée est remplacée par du matériau lignocellulosique frais avec une épaisseur de couche de 25 à 30 cm.

10. Une méthode selon la revendication 1 et/ou la revendication 4 dans laquelle la surface du lit de fermentation avant d'être soumis à la pulvérisation de composition de nutriment actif est travaillée afin d'oxygéner la couche de surface dans laquelle les déjections à traiter seront incorporées par mélange et enfouissement.

11. Utilisation d'une composition de nutriment actif comprenant une source de carbone métabolisable ou fermentable, une source d'azote assimilable et une source de phosphore sous la forme de sel minéral pour le traitement, par pulvérisation, de la surface d'un lit de fermentation comprenant des déjections animales mélangées avec un matériau inerte de forme particulaire consistant en un matériau lignocellulosique afin de déclencher ou d'augmenter la croissance des microorganismes naturellement présents dans les déjections et la décomposition de substances composant les ordures et les urines.

12. Utilisation selon la revendication 11 dans laquelle la source de carbone est choisie parmi les sucres simples ou complexes, les acides organiques ou leurs sels ainsi que les alcools.

13. Utilisation selon la revendication 11, dans laquelle ladite source d'azote assimilable est choisie parmi les sels d'ammoniaque incluant l'urée ainsi que les protéines solubles.

14. Utilisation selon la revendication 11, dans laquelle les composants sont tels que le rapport C:N est compris entre 2:1 et 3:1.

15. Utilisation selon la revendication 11 dans laquelle la composition de nutriment actif comprend également des vitamines.

16. Utilisation selon la revendication 11, dans laquelle la composition de nutriment actif comprend en outre des sels minéraux différents de ceux de l'acide phosphorique.
